(19) Europäisches Patentamt
European Patent Office
Office européen des brevets

(11) **EP 2 955 489 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(51) Int Cl.:
*G01D 5/26* (2006.01)   *G01D 5/34* (2006.01)
*G01D 5/347* (2006.01)   *G01B 9/02* (2006.01)
*G01B 11/14* (2006.01)

(21) Anmeldenummer: **15170025.9**

(22) Anmeldetag: **01.06.2015**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2014 DE 102014211004**

(43) Veröffentlichungstag der Anmeldung:
**16.12.2015 Patentblatt 2015/51**

(73) Patentinhaber: **Dr. Johannes Heidenhain GmbH 83301 Traunreut (DE)**

(72) Erfinder:
• **DRESCHER, Jörg**
  **83122 Samerberg (DE)**
• **HOLZAPFEL, Wolfgang**
  **83119 Obing (DE)**
• **JOERGER, Ralph**
  **83278 Traunstein (DE)**
• **KÄLBERER, Thomas**
  **86529 Schrobenhausen (DE)**
• **MEISSNER, Markus**
  **83236 Übersee (DE)**
• **MUSCH, Bernhard**
  **83301 Traunreut (DE)**
• **SPANNER, Erwin**
  **83278 Traunstein (DE)**

(56) Entgegenhaltungen:
EP-A2- 1 901 041   EP-A2- 2 388 558
EP-A2- 2 450 672   EP-A2- 2 466 272

EP 2 955 489 B1

**Beschreibung**

**GEBIET DER TECHNIK**

Die vorliegende Erfindung betrifft eine optische Positionsmesseinrichtung, die zur hochgenauen Bestimmung der Relativposition zweier zueinander beweglicher Objekte geeignet ist.

**STAND DER TECHNIK**

In bekannten hochgenauen optischen Positionsmesseinrichtungen werden neben intensitätsbezogenen Auswertemethoden auch polarisationsoptische Methoden zur Erzeugung von drei oder mehreren phasenverschobenen, verschiebungsabhängigen Abtastsignalen zur Positionsbestimmung verwendet. In Bezug auf die polarisationsoptische Erzeugung von Abtastsignalen sei etwa auf die EP 0 481 356 A2 der Anmelderin verwiesen.

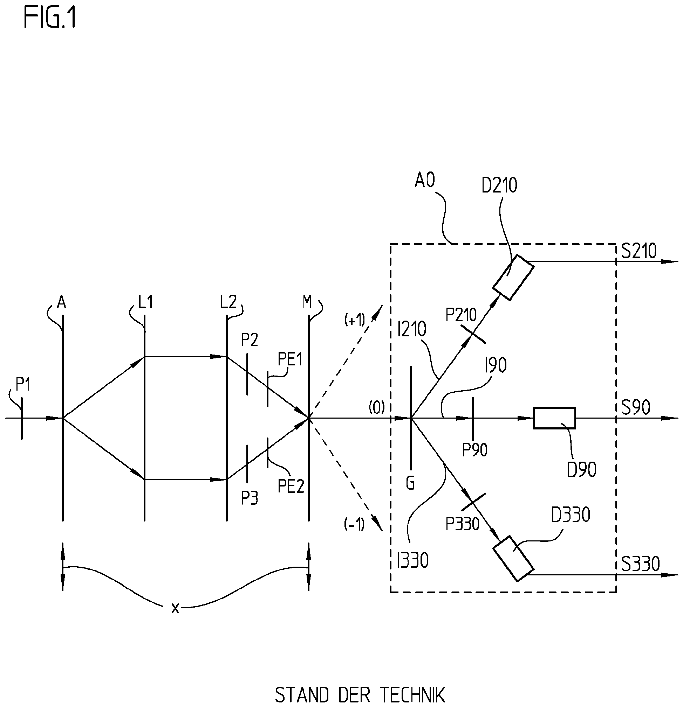

Das der Signalerzeugung gemäß der EP 0 481 356 A2 zugrundeliegende Prinzip ist in Figur 1 in einer schematisierten Darstellung des entfalteten Abtaststrahlengangs gezeigt. Die Gitter A, M sind hier entlang der angegebenen Messrichtung x zusammen gegenüber den restlichen Komponenten L1, L2, AO relativ beweglich angeordnet. Das von links her einfallende, über den Polarisator P1 definiert polarisierte Strahlenbündel wird dabei über das Gitter A in zwei Teilstrahlenbündel aufgespalten. Wie aus Figur 1 ersichtlich, werden in den Strahlverlauf der zur Interferenz zu bringenden Teilstrahlenbündel, in welchen die Positionsinformation kodiert ist, polarisationsoptische Elemente eingebracht, beispielweise unterschiedlich orientierte Lambda/4-Platten PE1, PE2. Die Lambda/4-Platten PE1, PE2 polarisieren die beiden durchlaufenden Teilstrahlenbündel orthogonal zueinander, d.h. die beiden Teilstrahlenbündel sind dann etwa links- und rechtszirkular polarisiert. Diese beiden Teilstrahlenbündel werden dann zu einem gemeinsamen Signalstrahlenbündel (0) überlagert und in einer nachfolgenden Auswerteoptik AO in 3 oder mehr überlagerte Teilstrahlenbündel I90, I210, I330 aufgespalten. Nach dem Durchlaufen unterschiedlich orientierter Polarisatoren P90, P210, P330 resultieren an den Detektorelementen D90, D210, D330 schließlich um jeweils 120° phasenverschobene Abtastsignale S90, S210, S330, die in bekannter Weise weiterverarbeitbar sind. Oft werden neben den Lambda/4-Platten PE1, PE2 in den Strahlengängen der aufgespaltenen Teilstrahlenbündel noch weitere polarisationsoptische Bauelemente in Form von Polarisatoren P2, P3 angeordnet, um darüber Fehlpolarisationen zu kompensieren, die durch von den Teilstrahlenbündeln vorher durchlaufene Gitter A, L1, L2 verursacht wurden.

Als nachteilig an einer derartigen polarisationsoptischen Erzeugung von mehreren phasenverschobenen, verschiebungsabhängigen Abtastsignalen erweist sich die Notwendigkeit, zusätzliche optische Elemente wie Lambda/4-Platten und Polarisatoren in den Abtaststrahlengang bzw. in den Abtastspalt zwischen den relativ zueinander bewegten Komponenten einbringen zu müssen. Bei begrenztem Bauvolumen der entsprechenden optischen Positionsmesseinrichtung oder einem geringen vorgesehenen Abtastabstand können derartige zusätzliche Bauelemente problematisch sein. Soll die Positionsmesseinrichtung analog zu den bekannten Prinzipien aus der WO 2008/138501 A1 aufgebaut werden, sind die Komponenten A, M und L1, L2 aus Figur 1 als zwei gegeneinander verschiebbare Maßverkörperungen ausgebildet. In diesem Fall ist eine mechanische Halterung von dazwischenliegenden stationären polarisationsoptischen Bauelementen dann oft nicht möglich.

Die zusätzlichen polarisationsoptischen Bauelemente im Abtaststrahlengang stellen desweiteren auch erhöhte Anforderungen an Ebenheit, Parallelität und Homogenität der eingesetzten Trägerstrukturen; erforderlich sind driftfreie und stabile Montageflächen zur Aufnahme dieser Trägerstrukturen. Mögliche Materialfehler sind hier nur mit sehr hohem zusätzlichem Aufwand über entsprechende Kalibrierverfahren kompensierbar. Dies gilt insbesondere dann, wenn in entsprechenden optischen Positionsmesseinrichtungen lange translationsinvariante Maßstäbe verwendet werden.

Weitere Systemeigenschaften wie Eigenfrequenzen oder Luftströmungen im Abtastspalt können durch zusätzlich erforderliche polarisationsoptische Bauelemente in den Abtaststrahlengängen darüber hinaus ebenfalls negativ beeinflusst werden.

Eine optische Positionsmesseinrichtung mit polarisationsoptischer Erzeugung phasenverschobener Abtastsignale ohne zusätzliche diskrete polarisationsoptische Bauelemente in den Abtaststrahlengängen ist bereits in der EP 2 466 272 A2 der Anmelderin vorgeschlagen worden. Von dieser Druckschrift wird in der vorliegenden Anmeldung der bei der Bildung des Oberbegriffs ausgegangen. Gemäß dieser Lösung sind die erforderlichen polarisationsoptischen Bauelemente in andere Komponenten des Abtaststrahlengangs integriert ausgebildet, beispielsweise in Form von Hochfrequenzgittern mit periodisch variierenden Strukturen. Bei einer derartigen Positionsmesseinrichtung besitzen die verwendeten Komponenten in Messrichtung positionsabhängige Polarisationseigenschaften. Die Maßverkörperung besteht in diesem Fall z.B. aus mehreren lokal veränderlichen Schichten und umfasst ein Hochfrequenzgitter mit einer Teilungsperiode $d_R < \lambda/2$, welches nur eine 0.

Beugungsordnung besitzt und die polarisationsoptische Funktionalität erzeugt. Die Gitterorientierung des Hochfrequenzgitters verändert sich dabei entlang der Messrichtung mit der Polarisations-Periode $d_P > hw_{Spot}$, die deutlich größer sein muss als die Breite $hw_{Spot}$ des beleuchteten Bereichs der Maßverkörperung, welche die Signalperiode SP der erzeugbaren Abtastsignale nach unten begrenzt. Da die 0. Beugungsordnung des Hochfrequenzgitters keine geometrische Strahlablenkung bewirken kann, ist darüber hinaus noch eine weitere Periodizität $d_T$ eines geometrisch ablenkenden Gitters nötig, welche groß genug ist, um mindestens eine erste Beugungsordnung zu erzeugen, d.h. es muss gelten $d_T > \lambda/2$. Da die Polarisationsperiodizität $d_P$ ebenfalls nicht zu einer geometrischen Ablenkung führen soll, wird diese deutlich größer als die Periodizität $d_T$ gewählt.

Für die Dimensionierung der drei in dieser Positionsmesseinrichtung auftretenden Periodizitäten $d_R$, $d_T$ und $d_P$ in den verschiedenen Gittern muss damit die nachfolgende Bedingung gelten:

$$d_R < \lambda/2 < d_T < hw_{Spot} < d_P < 4\,SP$$

Technologisch aufwendig zu produzieren sind grundsätzlich Gitter mit kleinen Periodizitäten $d_R$. Andrerseits ist für eine hohe Auflösung der entsprechenden Positionsmesseinrichtung eine kleine Signalperiode SP wünschenswert. Die bekannte Positionsmesseinrichtung aus der EP 2 466 272 A2 unterliegt daher gewissen Einschränkungen bezüglich des kleinen, zur Verfügung stehenden Dimensionierungsbereichs zwischen $d_R$ und SP, der für die Periodizitäten $d_T$ und $d_P$ der entsprechenden Gitter genutzt werden kann. Desweiteren existieren gewisse Einschränkungen hinsichtlich der Breite $hw_{Spot}$ des beleuchteten Bereichs der Maßverkörperung.

## ZUSAMMENFASSUNG DER ERFINDUNG

Der vorliegenden Erfindung liegt die Aufgabe zugrunde, eine optische Positionsmesseinrichtung mit polarisationsoptischer Erzeugung phasenverschobener Abtastsignale zu schaffen, die keine zusätzlichen polarisationsoptischen Bauelemente im Abtaststrahlengang erfordert. Dabei sollte die entsprechende Positionsmesseinrichtung möglichst geringen Einschränkungen unterworfen sein, wenn bestimmte Signalperioden der erzeugten Abtastsignale erforderlich sind.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Erfassung der Relativposition einer ersten Maßverkörperung und einer zweiten Maßverkörperung, die relativ zueinander entlang mindestens einer Messrichtung beweglich angeordnet sind. An einem Aufspaltgitter erfolgt eine Aufspaltung eines von einer Lichtquelle emittierten Beleuchtungsstrahlenbündels in mindestens zwei Teilstrahlenbündel. Die Teilstrahlenbündel erfahren beim Durchlaufen von Abtaststrahlengängen unterschiedliche polarisationsoptische Wirkungen; nach einer Wiedervereinigung der unterschiedlich polarisierten Teilstrahlenbündel an einem Vereinigungsgitter sind aus dem resultierenden Signalstrahlenbündel mehrere phasenverschobene, verschiebungsabhängige Abtastsignale erzeugbar. In den Abtaststrahlengängen der Teilstrahlenbündel zwischen Aufspaltung und Wiedervereinigung sind keine polarisationsoptischen Bauelemente. Zur Erzeugung der unterschiedlichen polarisationsoptischen Wirkungen auf die Teilstrahlenbündel ist vorgesehen, dass
- ein konisch einfallendes Beleuchtungsstrahlenbündel das Aufspaltgitter beaufschlagt, wobei das einfallende Beleuchtungsstrahlenbündel in einer Einfallsebene senkrecht zur Messrichtung unter einem von 0° verschiedenen Winkel verläuft und die Einfallsebene durch die Gitternormale auf das Aufspaltgitter und die Einfallsrichtung des Beleuchtungsstrahlenbündels aufgespannt ist und - die Abtaststrahlengänge der Teilstrahlenbündel zwischen Aufspaltung und Wiedervereinigung spiegelsymmetrisch zur Einfallsebene ausgebildet sind.

Mit Vorteil weist das von der Lichtquelle emittierte Beleuchtungsstrahlenbündel eine lineare Polarisation mit symmetrischer oder antisymmetrischer Spiegelsymmetrie bezüglich der Einfallsebene auf.

Es kann vorgesehen werden, dass in den Abtaststrahlengängen der Teilstrahlenbündel zwischen Aufspaltung und Wiedervereinigung jeweils ein oder mehrere Gitter angeordnet sind, die derart ausgebildet sind, dass

- die Spiegelsymmetrie bezüglich der Einfallsebene für die Teilstrahlenbündel erhalten bleibt, und
- dass im Zusammenwirken der Komponenten ein Polarisationsübersprechen von senkrecht und parallel polarisierten Teilstrahlenbündeln möglich ist.

Dabei können die Teilstrahlenbündel am Wiedervereinigungsort eine entgegengesetzte zirkulare Polarisation aufweisen.

Alternativ ist auch möglich, dass die Teilstrahlenbündel am Wiedervereinigungsort eine zueinander orthogonale elliptische Polarisation aufweisen.

Ferner kann vorgesehen sein, dass die Teilstrahlenbündel am Wiedervereinigungsort so polarisiert sind, dass das Vektorprodukt der zugehörigen Jones-Vektoren den Wert 2/3 nicht übersteigt.

In einer möglichen Ausführungsform umfasst die erste Maßverkörperung ein sich in Messrichtung erstreckendes erstes Reflexionsgitter oder Transmissionsgitter, das als Aufspaltgitter für das Beleuchtungsstrahlenbündel fungiert.

Dabei kann die erste Maßverkörperung ein sich in Messrichtung erstreckendes zweites Reflexionsgitter oder Transmissionsgitter umfassen, das als Vereinigungsgitter für die Teilstrahlenbündel fungiert.

Es ist hierbei ferner möglich, dass die zweite Maßverkörperung eine transparente Platte umfasst, in der für jedes Teilstrahlenbündel ein diffraktiver Retroreflektor oder ein diffraktives Dachkantprisma mit einer Linse und einem Reflektor ausgebildet ist.

In der entsprechenden Ausführungsform kann vorgesehen sein, dass

- auf der der ersten Maßverkörperung zugewandten ersten Seite der transparenten Platte die Linsen in Form mindestens eines Transmissionsgitters ausgebildet sind und
- auf der der ersten Maßverkörperung abgewandten zweiten Seite der transparenten Platte der Reflektor in Form mindestens einer Reflexionsschicht ausgebildet ist, deren reflektierende Seite in Richtung der ersten Seite der Platte orientiert ist.

Ebenso ist es möglich, dass die Komponenten der ersten Maßverkörperung und der zweiten Maßverkörperung derart ausgebildet und angeordnet sind, dass

- das von der Lichtquelle einfallende Beleuchtungsstrahlenbündel am ersten Reflexionsgitter der ersten Maßverkörperung eine Aufspaltung in zwei Teilstrahlenbündel erfährt und die Teilstrahlenbündel dann in Richtung der zweiten Maßverkörperung propagieren,
- die Teilstrahlenbündel in der transparenten Platte der zweiten Maßverkörperung jeweils einen diffraktiven Retroreflektor oder einen Dachkantreflektor durchlaufen und dann senkrecht zur Messrichtung versetzt wieder in Richtung der ersten Maßverkörperung propagieren,
- die Teilstrahlenbündel am zweiten Reflexionsgitter der ersten Maßverkörperung an einem Vereinigungsort zur Überlagerung kommen und ein Signalstrahlenbündel mit dem Paar überlagerter Teilstrahlenbündel wieder zurück in Richtung der zweiten Maßverkörperung propagiert.

Dabei kann in einer gegenüber den beiden Maßverkörperungen stationären Abtasteinheit ein Umlenkspiegel, ein Gitter, eine Linse sowie mehrere Polarisatoren angeordnet sein und die Abtasteinheit über ein oder mehrere Lichtleitfasern mit einer Lichtquelle und mehreren Detektorelementen gekoppelt werden.

Hierbei ist desweiteren möglich, dass in einer gegenüber den beiden Maßverkörperungen stationären Abtasteinheit eine Lichtquelle, ein Umlenkspiegel, ein Gitter eine Linse, mehrere Polarisatoren sowie mehrere Detektorelementen angeordnet sind.

In einer weiteren Ausführungsform kann schließlich vorgesehen sein, dass jede der beiden Maßverkörperungen entlang mindestens einer Messrichtung beweglich angeordnet ist.

Als besonders vorteilhaft erweist sich bei der erfindungsgemäßen optischen Positionsmesseinrichtung, dass nunmehr keine separaten polarisationsoptischen Bauelemente im Abtaststrahlengang benötigt werden. Die erforderliche polarisationsoptische Funktionalität resultiert aus der geeigneten Auslegung des Abtaststrahlengangs sowie der Dimensionierung und Ausbildung der durchlaufenen Gitter im Abtaststrahlengang.

Die oben diskutierten Beschränkungen hinsichtlich der Dimensionierung der Periodizitäten der verschiedenen Gitter sowie der Breite des beleuchteten Bereichs der Maßverkörperung entfallen somit.

Es lassen sich damit auch Abtastungen mit einer polarisationsoptischen Erzeugung phasenverschobener Abtastsignale realisieren, die einen sehr kleinen Abtastspalt aufweisen und in dem keine Integration zusätzlicher polarisationsoptischer Bauelemente möglich wäre.

Insbesondere sind optische Positionsmesseinrichtungen realisierbar, wie sie aus der o.g. WO 2008/138501 A1 bekannt sind und die zwei entlang unterschiedlicher Richtungen bewegliche Maßverkörperungen umfassen und bei denen im Abtastspalt aufgrund der zwei vorgesehenen Bewegungsrichtungen keine mechanische Halterung für zusätzliche polarisationsoptische Bauelemente möglich ist.

Weitere Einzelheiten und Vorteile der vorliegenden Erfindung seien anhand der nachfolgenden Beschreibung eines Ausführungsbeispiels der erfindungsgemäßen Vorrichtung in Verbindung mit den Figuren erläutert.

## KURZE BESCHREIBUNG DER ZEICHNUNGEN

Es zeigt

Figur 1    eine schematisierte Darstellung einer optischen Positionsmesseinrichtung gemäß dem Stand der Technik;

Figur 2a    eine erste schematisierte Ansicht des entfalteten Abtaststrahlengangs der erfindungsgemäßen optischen Positionsmesseinrichtung in einer Ebene, die die Messrichtung enthält;

Figur 2b    eine zweite schematisierte Ansicht des entfalteten Abtaststrahlengangs der erfindungsgemäßen optischen Positionsmesseinrichtung aus Figur 2a in einer Ebene, die senkrecht zur Messrichtung orientiert ist;

Figur 3a    eine erste schematisierte Ansicht eines Ausführungsbeispiels der erfindungsgemäßen optischen Positionsmesseinrichtung;

Figur 3b    eine zweite schematisierte Ansicht des Ausführungsbeispiels der erfindungsgemäßen optischen Positionsmesseinrichtung aus Figur 3a;

Figur 4a    eine Draufsicht auf die erste Maßverkörperung der erfindungsgemäßen optischen Positionsmesseinrichtung aus den Figuren 3a, 3b mit den darauf angeordneten Reflexionsgittern;

Figur 4b    eine Draufsicht auf die erste Seite der zweiten Maßverkörperung der optischen Positionsmesseinrichtung aus den Figuren 3a, 3b mit dem darauf angeordneten Transmissionsgitter;

Figur 4c    eine Draufsicht auf die zweite Seite der zweiten Maßverkörperung der optischen Positionsmesseinrichtung aus den Figuren 3a, 3b mit dem darauf angeordneten Reflektor.

## BESCHREIBUNG DER AUSFÜHRUNGSFORMEN

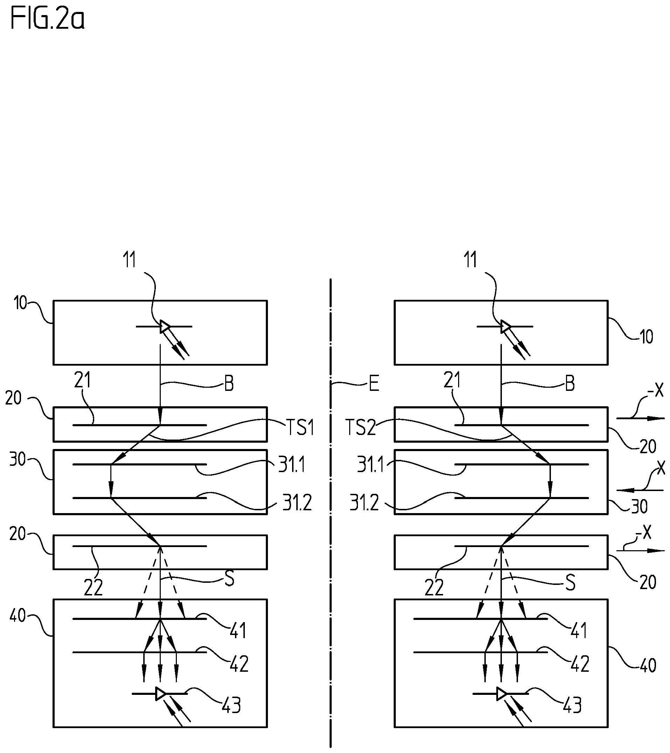

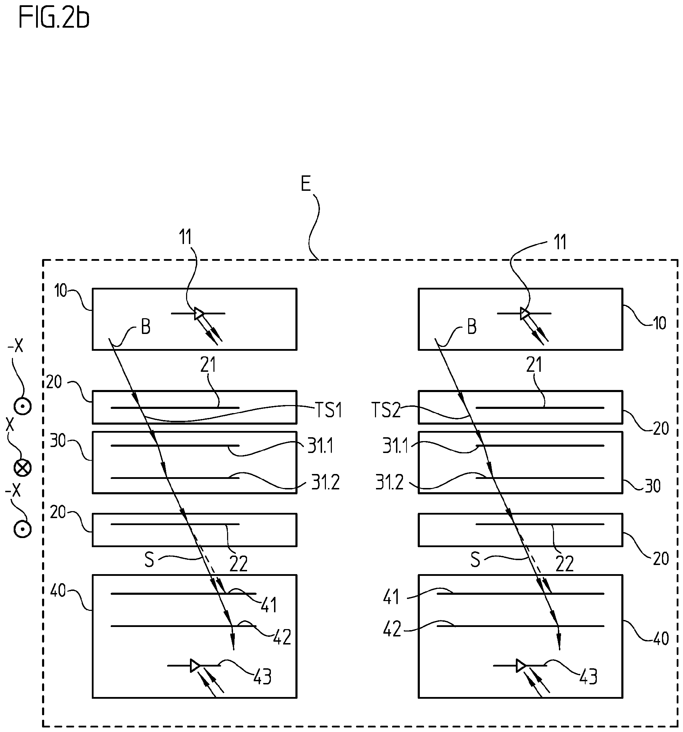

Grundlegende Prinzipien der erfindungsgemäßen optischen Positionsmesseinrichtung werden nachfolgend anhand der Figuren 2a, 2b erläutert, ein konkretes Ausführungsbeispiel anschließend in Verbindung mit den restlichen Figuren.

Die Figuren 2a, 2b zeigen in stark schematisierter Form den Abtaststrahlengang eines Ausführungsbeispiels der erfindungsgemäßen optischen Positionsmesseinrichtung in zwei verschiedenen Ansichten. Figur 2a veranschaulicht dabei den entfalteten Abtaststrahlengang in einer Ebene, die die Messrichtung x enthält; Figur 2b zeigt den entfalteten Abtaststrahlengang in einer Ebene, die senkrecht zur Messrichtung x orientiert ist.

Wie aus den dargestellten entfalteten Abtaststrahlengängen ersichtlich, umfasst die erfindungsgemäße optische Positionsmesseinrichtung eine Beleuchtungseinheit 10 mit einer Lichtquelle 11, eine erste Maßverkörperung 20 mit einem Aufspaltgitter 21 und einem Vereinigungsgitter 22, eine zweite Maßverkörperung 30 mit einem zweimal durchlaufenen Gitter 31 sowie eine Detektionseinheit 40 mit einem Gitter 41, Polarisatoren 42 und einer Detektoranordnung 43.

Relativ zueinander beweglich bzw. gegeneinander entlang der angegebenen mindestens einen Messrichtung x verschiebbar sind in der erfindungsgemäßen Positionsmesseinrichtung die beiden Maßverkörperungen 20, 30 angeordnet. Hierbei ist im gezeigten Beispiel jede der beiden Maßverkörperungen 20, 30 entlang der Messrichtung x beweglich angeordnet. Grundsätzlich ist alternativ hierzu ausreichend, wenn eine Relativbeweglichkeit der beiden Maßverkörperungen vorliegt, also wenn z.B. lediglich eine Maßverkörperung entlang mindestens einer Messrichtung beweglich angeordnet ist und die andere demgegenüber stationär.

Die beiden eingesetzten Maßverkörperungen 20, 30 können im Rahmen der vorliegenden Erfindung sowohl Reflexions- als auch Transmissionsgitter umfassen.

In der entfalteten Strahlengangdarstellung ist in den Figuren 2a, 2b die erste Maßverkörperung 20 je zweimal dargestellt, da diese im Verlauf des Strahlengangs zweimal beaufschlagt wird, nämlich ein erstes Mal von dem von der Lichtquelle 11 her einfallenden Beleuchtungsstrahlenbündel B, das dabei an einem als Aufspaltgitter 21 der ersten Maßverkörperung 20 in zwei Teilstrahlenbündel TS1, TS2 aufgespalten wird und ein zweites Mal an einem Vereinigungsgitter 22 von den zur Wiedervereinigung gelangenden Teilstrahlenbündeln TS1, TS2. Analog hierzu sind auch in der zweiten Maßverkörperung 30 die beiden durchlaufenen Gitter 31.1, 31.2 in den Figuren 2a, 2b dargestellt.

In den jeweiligen Teildarstellungen der Figuren 2a, 2b ist der entfaltete Teil-Abtaststrahlengang der an der ersten Maßverkörperung 20 aufgespaltenen zwei Teilstrahlenbündel TS1, TS2 ersichtlich. Zwischen der Aufspaltung des einfallenden Beleuchtungsstrahlenbündels B am Aufspaltgitter 21 der ersten Maßverkörperung 20 und der Wiedervereinigung der Teilstrahlenbündel TS1, TS2 am Vereinigungsgitter 22 der ersten Maßverkörperung 20 durchlaufen die Teilstrahlenbündel TS1, TS2 die zweite Maßverkörperung 20 bzw. zweimal die dort vorgesehenen Gitter 31.1, 31.2.

Das am Vereinigungsgitter 22 wiedervereinigte Paar von Teilstrahlenbündeln TS1, TS2 propagiert als Signalstrahlenbündel S anschließend in Richtung der Detektionseinheit 40, wo daraus in bekannter Art und Weise mit Hilfe eines Gitters 41, nachgeordneten Polarisatoren 42 und der Detektoranordnung 43 polarisationsoptisch mehrere phasenverschobene Abtastsignale erzeugbar sind; in Bezug auf die Ausbildung und Funktionsweise der Detektionseinheit 40 sei im übrigen auf die eingangs erwähnte EP 0 481 356 A2 verwiesen.

Über mehrere, nachfolgend noch zu erläuternde Maßnahmen ist in der erfindungsgemäßen Positionsmesseinrichtung sichergestellt, dass die zur Überlagerung gelangenden Teilstrahlenbündel TS1, TS2 orthogonal zueinander polarisiert sind. In Richtung der Detektionseinheit 40 propagiert somit ein polarisationscodiertes Signalstrahlenbündel S, aus dem dort mehrere phasenverschobene Abtastsignale generierbar sind. Zur Erzeugung des polarisationscodierten Signalstrahlenbündels S sind erfindungsgemäß nunmehr keine diskreten polarisationsoptischen Bauelemente im Abtaststrahlengang erforderlich; die unterschiedliche Polarisation der zur Überlagerung gelangenden Teilstrahlenbündel TS1, TS2 wird vielmehr über die anschließend erläuterten erfindungsgemäßen Maßnahmen sichergestellt.

Hierzu gehört, dass wie aus Figur 2a ersichtlich, die Abtaststrahlengänge der Teilstrahlenbündel TS1, TS2 zwischen der Aufspaltung und der Wiedervereinigung spiegelsymmetrisch zur Einfallsebene E ausgebildet sind. Diese Symmetrie bezieht sich hierbei sowohl auf die Ausbreitungsrichtung der Teilstrahlenbündel als auch auf deren Polarisationsrichtungen. Die Einfallsebene ist in Figur 2a wie gezeigt senkrecht zur Zeichenebene orientiert. Generell sei die Einfallsebene E als diejenige Ebene definiert, die durch die Einfallsrichtung des in Richtung der ersten Maßverkörperung 20 propagierenden Beleuchtungsstrahlenbündels B und die Normale auf das Aufspaltgitter 21 aufgespannt wird. Die in den Maßverkörperungen 20 und 30 integrierten optischen Komponenten sind in Messrichtung x i.w. translationsinvariant ausgebildet. Dadurch ist sichergestellt, dass die Symmetrie des Beleuchtungsstrahlenbündels B bezüglich der Einfallsebene E durch die Maßverkörperungen 20 und 30 nicht aufgehoben werden kann.

Das von der Lichtquelle emittierte Beleuchtungsstrahlenbündel B weist im übrigen eine lineare Polarisation mit symmetrischer oder antisymmetrischer Spiegelsymmetrie bezüglich der Einfallsebene E auf; vorzugsweise ist das Beleuchtungsstrahlenbündel B hierbei s-polarisiert oder p-polarisiert, d.h. der zugehörige sog. Jones-Vektor $\begin{pmatrix} E_x \\ E_y \end{pmatrix}$ ist $\begin{pmatrix} 1 \\ 0 \end{pmatrix}$ bzw. $\begin{pmatrix} 0 \\ 1 \end{pmatrix}$. Im Hinblick auf den bekannten Jones-Formalismus zur Beschreibung linearer optischer Abbildungen unter Berücksichtigung der Polarisation sei im übrigen auf den Eintrag "Jones-Formalismus" in der Internet-Enzyklopädie WIKIPEDIA verwiesen.

Desweiteren ist erfindungsgemäß vorgesehen, dass das Aufspaltgitter 21 auf der ersten Maßverkörperung 20 von einem konisch einfallenden Beleuchtungsstrahlenbündel B, d.h. unter einem nicht-senkrechten Winkel, beaufschlagt wird. Das einfallende Beleuchtungsstrahlenbündel B verläuft hierbei in einer Ebene senkrecht zur Messrichtung x unter einem von 0° verschiedenen Winkel. Es besitzt somit eine Ausbreitungsrichtungs-Komponente, die senkrecht zur Gitternormalen des Aufspaltgitters 21 und senkrecht zur Messrichtung x orientiert ist; eine Richtungskomponente in Messrichtung x enthält das Beleuchtungsstrahlenbündel B nicht. Hierzu ist die Beleuchtungseinheit 10 mit der Lichtquelle 11 entsprechend auszubilden bzw. anzuordnen, etwa derart, dass das Beleuchtungsstrahlenbündel B nicht in der z-Richtung, aber in der yz-Ebene liegt, wenn mit x die Messrichtung und mit z die Richtung der Normalen auf die erste Maßverkörperung 20 bezeichnet wird. Im Hinblick auf die konische Beleuchtung des Aufspaltgitters 21 sei insbesondere auf die Darstellungen in Figur 2b verwiesen, die den Abtaststrahlengang in der Einfallsebene E bzw. das in der Einfallsebene E schräg auf das Aufspaltgitter 21 einfallende Beleuchtungsstrahlenbündel B zeigt. Die Einfallsebene E wird hierbei durch die Gitternormale auf das Aufspaltgitter 21 und die Einfallsrichtung des Beleuchtungsstrahlenbündels B aufgespannt. Der konische Einfall des Beleuchtungsstrahlenbündels B auf die Maßverkörperungen 20, 30 bewirkt ein sog. Polarisationsübersprechen, welches sich in von Null verschiedenen Nebendiagonalelementen $m_{sp}$ und $m_{ps}$ der Jones-Matrix des optischen Systems mit den zwei Maßverkörperungen 20, 30 äußert und zu einer Unterscheidbarkeit der Teilstrahlbündel TS1, TS2 führt.

Die Wechselwirkung jedes Gitters 21, 22, 31.1, 31.2 mit den entsprechenden Teilstrahlenbündeln TS1, TS2 wird dabei über eine Jones-Matrix $M_Z^{(n)}$ beschrieben, welche von den jeweiligen Schicht- und Gitterparametern abhängt und das Überkoppeln des elektrischen Feldes in die möglichen Polarisationszustände s und p phasenrichtig beschreibt.

Das Aufspaltgitter 21 wird dabei nachfolgend mit A bezeichnet, die beiden Linsengitter 31.1, 31.2 mit L1, L2, ein zwischen den beiden Linsen evtl. vorhandener Reflektor 32 mit R und das Vereinigungsgitter 22 mit V.

Die Gitterparameter der verschiedenen Gitter 21, 22, 31.1, 31.2 werden dann so bestimmt, dass z.B. bei einlaufendem s-polarisiertem elektrischem Feld mit dem Jones-Vektor $\begin{pmatrix} 1 \\ 0 \end{pmatrix}$ sich die orthogonal zirkularen Jones-Vektoren für die beiden Teilstrahlenbündel TS1 und TS2 ergeben:

$$M_V^{(-1)} M_{L2}^{(+1)} M_R^{(0)} M_{L1}^{(+1)} M_A^{(-1)} \begin{pmatrix} 1 \\ 0 \end{pmatrix} = \frac{1}{\sqrt{2}} \begin{pmatrix} 1 \\ -i \end{pmatrix}$$

$$M_V^{(+1)} M_{L2}^{(-1)} M_R^{(0)} M_{L1}^{(-1)} M_A^{(+1)} \begin{pmatrix} 1 \\ 0 \end{pmatrix} = \frac{1}{\sqrt{2}} \begin{pmatrix} 1 \\ +i \end{pmatrix}$$

(Gl. 1)

Aus Symmetriegründen sind die beiden interferierenden Teilstrahlenbündel TS1, TS2 zirkular polarisiert. In gleicher Weise können die verschiedenen Gitter 21, 22, 31.1, 31.2 auch so bestimmt werden, dass für ein einlaufendes p-polarisiertes elektrisches Feld mit dem Jones-Vektor $\begin{pmatrix} 0 \\ 1 \end{pmatrix}$ zueinander orthogonal zirkular polarisierte Teilstrahlenbündel TS1 und TS2 erzeugt werden. Auch können alternativ die Gitter 21, 22, 31.1, 31.2 so optimiert werden, dass die Teilstrahlenbündel TS1, TS2 zueinander linear orthogonal polarisiert werden. Dann gilt statt Gleichung 1 folgende Gleichung 2 für ein einlaufendes s-polarisiertes Feld:

$$\begin{pmatrix} E_x \\ E_y \end{pmatrix}_{TS1} = M_V^{(-1)} M_{L2}^{(+1)} M_R^{(0)} M_{L1}^{(+1)} M_A^{(-1)} \begin{pmatrix} 1 \\ 0 \end{pmatrix} = \frac{1}{\sqrt{2}} \begin{pmatrix} 1 \\ -1 \end{pmatrix}$$

$$\begin{pmatrix} E_x \\ E_y \end{pmatrix}_{TS2} = M_V^{(+1)} M_{L2}^{(-1)} M_R^{(0)} M_{L1}^{(-1)} M_A^{(+1)} \begin{pmatrix} 1 \\ 0 \end{pmatrix} = \frac{1}{\sqrt{2}} \begin{pmatrix} 1 \\ +1 \end{pmatrix}$$

(Gl. 2)

Die austretenden Teilstrahlenbündel TS1 und TS2 sind in diesem Fall unter +45° bzw. -45° linear polarisiert und weisen damit wieder eine zueinander spiegelsymmetrische und orthogonale Polarisation auf.

Obige Gleichungen 1 und 2 können zu Gleichung 3 verallgemeinert werden:

$$\begin{pmatrix} E_x \\ E_y \end{pmatrix}_{TS1} = M_V^{(-1)} M_{L2}^{(+1)} M_R^{(0)} M_{L1}^{(+1)} M_A^{(-1)} \begin{pmatrix} E_x \\ E_y \end{pmatrix}_{in} = \frac{1}{\sqrt{2}} \begin{pmatrix} 1 \\ -e^{i\varphi} \end{pmatrix}$$

$$\begin{pmatrix} E_x \\ E_y \end{pmatrix}_{TS2} = M_V^{(+1)} M_{L2}^{(-1)} M_R^{(0)} M_{L1}^{(-1)} M_A^{(+1)} \begin{pmatrix} E_x \\ E_y \end{pmatrix}_{in} = \frac{1}{\sqrt{2}} \begin{pmatrix} 1 \\ +e^{i\varphi} \end{pmatrix}$$

(Gl. 3)

Hierbei kann das einfallende elektrische Feld mit dem Jones-Vektor $\begin{pmatrix} E_x \\ E_y \end{pmatrix}_{in}$ entweder s-polarisiert $\begin{pmatrix} 1 \\ 0 \end{pmatrix}$ oder p-polarisiert $\begin{pmatrix} 0 \\ 1 \end{pmatrix}$ sein. Der Winkel $\varphi$ kann beliebig gewählt werden. Unabhängig vom Winkel $\varphi$ sind die beiden Teilstrahlenbündel TS1 und TS2 stets orthogonal polarisiert, d.h. das Vektorprodukt der beiden Jones-Vektoren ist Null (* = konjugiert komplex):

$$\begin{pmatrix} E_x \\ E_y \end{pmatrix}_{TS1} \cdot \begin{pmatrix} E_x \\ E_y \end{pmatrix}_{TS2}^{*} = 0$$

(Gl. 4)

Ihre Polarisationszustände sind für $\varphi=0$ und $\varphi=\pi$ jeweils linear polarisiert und für $\varphi=\pi/2$ und $\varphi=3\pi/2$ jeweils zirkular polarisiert. Für $\varphi \neq n\cdot\pi$ (n=0,1,2,3) ist die Polarisation elliptisch.

Über diese Maßnahmen wird in der erfindungsgemäßen optischen Positionsmesseinrichtung erreicht, dass zwischen den relativ zueinander beweglichen Maßverkörperungen 20, 30 keine separaten polarisationsoptischen Bauelemente angeordnet werden müssen, um ein polarisationscodiertes Signalstrahlenbündel S zu erzeugen. Das in Richtung der Detektionseinheit 40 propagierende Signalstrahlenbündel S setzt sich damit wie gewünscht aus zwei orthogonal polarisierten, überlagerten Teilstrahlenbündeln TS1, TS2 zusammen und kann in bekannter Art und Weise zur Erzeugung der mehreren phasenverschobenen Abtastsignale ausgewertet werden. Üblicherweise werden die beiden überlagerten Teilstrahlenbündel TS1 und TS2 in mehrere überlagerte Teilstrahlenbündel aufgespalten und jeweils durch λ/2- oder λ/4-Platten in zueinander orthogonal linear polarisierte, überlagerte Teilstrahlenbündel umgewandelt. Diese durchlaufen Polarisatoren und werden von Detektoren in Abtastsignale gewandelt. Durch Ausrichtung der Polarisatoren kann die Phasenlage der Abtastsignale jeweils eingestellt werden, so dass mehrere zueinander phasenverschobene Abtastsignale erzeugbar sind.

Der Modulationsgrad der Abtastsignale hängt von der Orthogonalität der Polarisation der beiden Teilstrahlenbündel TS1 und TS2 ab. In der Praxis werden aufgrund von Toleranzen in der Fertigung der Gitter 21, 22, 31.1, 31.2 die beiden Teilstrahlenbündel TS1, TS2 nicht ideal orthogonal polarisiert sein. Für einen ausreichenden Modulationsgrad von mindestens 33% darf das Vektorprodukt der zugehörigen Jones-Vektoren in Abweichung von Gleichung 4 maximal 2/3 sein:

$$\begin{pmatrix} E_x \\ E_y \end{pmatrix}_{TS1} \cdot \begin{pmatrix} E_x \\ E_y \end{pmatrix}_{TS2}^{*} < \frac{2}{3} \qquad\qquad \text{(Gl. 5)}$$

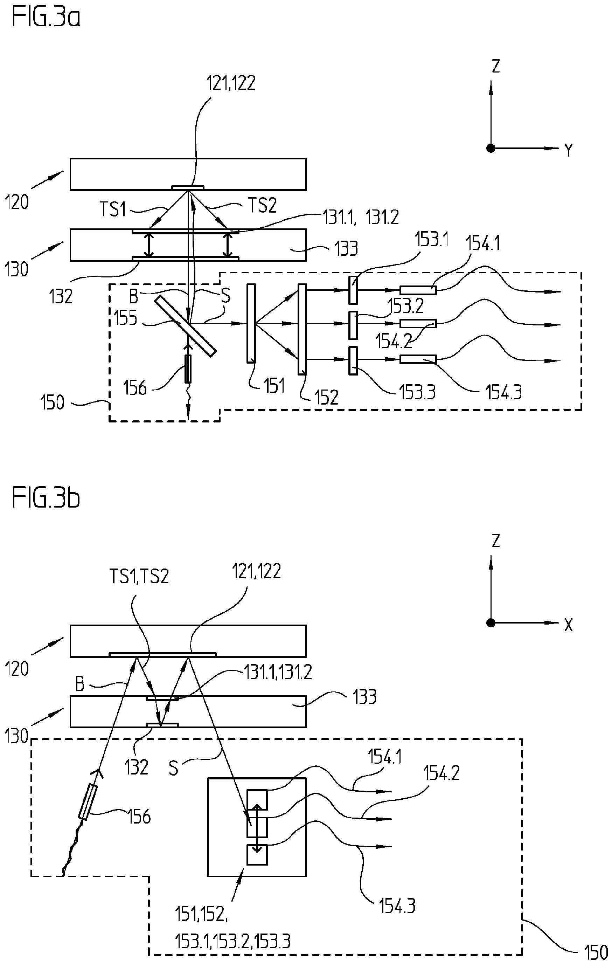

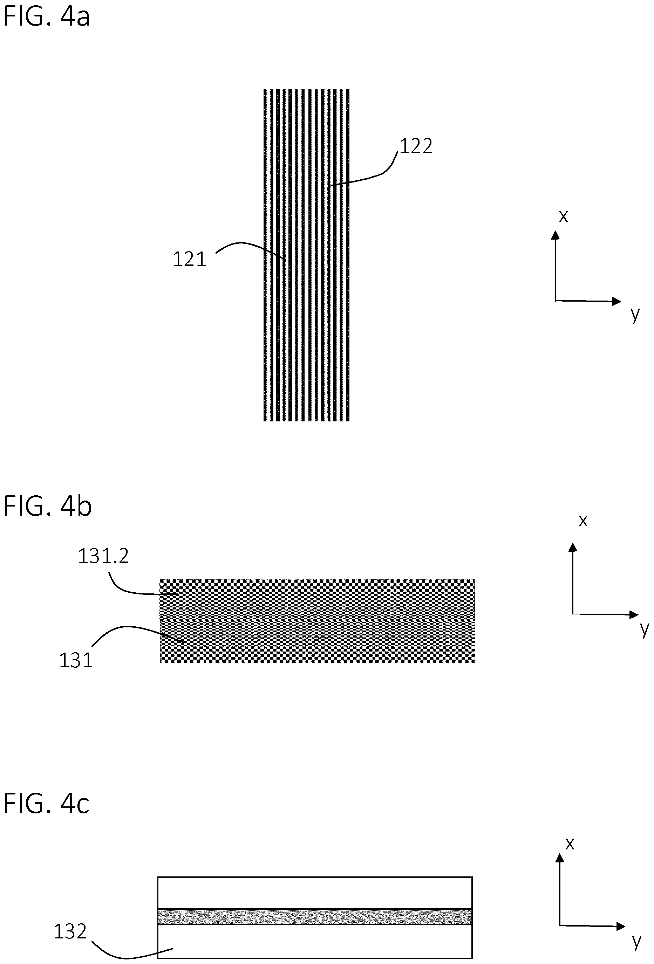

Ein konkretes Ausführungsbeispiel der erfindungsgemäßen optischen Positionsmesseinrichtung wird nachfolgend anhand der Figuren 3a, 3b sowie 4a - 4c erläutert. Während die Figuren 3a, 3b jeweils unterschiedliche schematisierte Schnittansichten der Positionsmesseinrichtung zeigen, sind in den Figuren 4a - 4c Draufsichten auf verschiedene Komponenten dieser Positionsmesseinrichtung gezeigt.

Die dargestellte Positionsmesseinrichtung umfasst zwei Maßverkörperungen 120, 130, die analog zur obigen Darstellung in den Figuren 2a, 2b jeweils entlang der Messrichtung y beweglich angeordnet sind. Den beweglichen Maßverkörperungen 120, 130 gegenüber stationär angeordnet ist eine Abtasteinheit 150 mit verschiedenen optischen Bauelementen vorgesehen. Über Lichtleitfasern 156, 154.1 - 154.3 ist die Abtasteinheit 150 mit einer Lichtquelle sowie mehreren optoelektronischen Detektorelementen verbunden, die in den Figuren nicht gezeigt sind.

Die Abtasteinheit 150 und die Maßverkörperungen 120, 130 sind z.B. mit nicht dargestellten Maschinenkomponenten mechanisch gekoppelt, deren Relativpositionen mittels der erfindungsgemäßen Positionsmesseinrichtung bestimmbar sind. Die von der Positionsmesseinrichtung erzeugten verschiebungsabhängigen Abtastsignale werden von einer übergeordneten Maschinensteuerung zur Positionierung der Maschinenkomponenten weiterverarbeitet.

Das von der - nicht gezeigten - Lichtquelle emittierte Beleuchtungsstrahlenbündel B wird der Abtasteinheit 150 über die Lichtleitfaser 156 zugeführt, durchläuft zunächst einen optisch unwirksamen Bereich der zweiten Maßverkörperung 130 und trifft dann auf Seiten der ersten Maßverkörperung 120 auf ein Aufspaltgitter 121, das hier als Reflexionsgitter ausgebildet ist. Wie aus Figur 4a ersichtlich besteht das Aufspaltgitter 121 aus einer in der Messrichtung y periodischen Anordnung von reflektierenden und nicht-reflektierenden Teilungsmarkierungen, die sich wiederum mit ihrer Längsachse parallel zur x-Richtung erstrecken.

Am reflektiv ausgebildeten Aufspaltgitter 121 der ersten Maßverkörperung 120 resultiert eine Beugung bzw. Aufspaltung des konisch darauf einfallenden Beleuchtungsstrahlenbündels B in zwei erste Beugungsordnungen bzw. in zwei Teilstrahlenbündel TS1, TS2. Die beiden Teilstrahlenbündel TS1, TS2 durchlaufen dann den Abtastspalt zwischen der ersten Maßverkörperung 120 und der zweiten Maßverkörperung 130 und treffen anschließend auf die zweite Maßverkörperung 130.

Die zweite Maßverkörperung 130 umfasst eine transparente Platte 133, auf deren der ersten Maßverkörperung 120 zugewandten ersten Seite zwei sich in y-Richtung erstreckende Transmissionsgitter 131.1, 131.2 ausgebildet sind. Auf der gegenüberliegenden zweiten Seite der Platte 133 ist ein Reflektor 132 in Form einer Reflexionsschicht ausgebildet, deren reflektierende Seite in Richtung der ersten Seite der transparenten Platte 133 orientiert ist. Über diese Ausgestaltung der zweiten Maßverkörperung 130 wird für die beiden darauf einfallenden Teilstrahlenbündel TS1, TS2 im dargestellten Ausführungsbeispiel ein diffraktiver Dachkantreflektor ausgebildet, der jeweils aus zwei Linsen und einem Reflektor besteht. Die Linsen werden hierbei durch die Transmissionsgitter 131.1, 131.2 gebildet, der Reflektor 132 durch die Reflexionsschicht.

Wie aus Figur 3b ersichtlich, werden die Teilstrahlenbündel TS1, TS2 nach dem erstmaligen Durchlaufen des Transmissionsgitters 131.1, der Reflexion am Reflektor 132 und dem nochmaligen Durchlaufen des Transmissionsgitters 131.2 somit senkrecht zur Messrichtung y versetzt zurück in Richtung der ersten Maßverkörperung 120 reflektiert. Auf der ersten Maßverkörperung 120 kommen die Teilstrahlenbündel TS1, TS an einem Vereinigungsort auf einem Vereinigungsgitter 122 zur Überlagerung, so dass ein Signalstrahlenbündel S sodann wieder zurück in Richtung der zweiten Maßverkörperung 130 propagiert. Dort durchläuft das Signalstrahlenbündel S einen optisch nicht-aktiven Bereich der transparenten Platte 133 und gelangt nach Umlenkung über einen Auskoppelspiegel 155 auf eine Detektionseinheit, die u.a. Gitter 151, eine Linse 152 sowie mehrere Polarisatoren 153.1, 153.2, 153.3 umfasst. Den Polarisatoren 153.1, 153.2, 153.3 sind im vorliegenden Ausführungsbeispiel jeweils Lichtleitfasern 154.1, 154.2, 54.3 nachgeordnet, die die über das Gitter 151 aufgespalten Teilstrahlenbündel schließlich - nicht dargestellten - Detektorelementen zuführen, welche entfernt von der Abtasteinheit 150 angeordnet sind.

Im vorliegenden Ausführungsbeispiel ist die polarisationsdrehende Funktionalität der bei den im eingangs diskutierten Stand der Technik erforderlichen Lambda/4 Platten durch die Symmetrie der Gitter 121, 122, 1311., 131.2 der ersten und zweiten Maßverkörperung 120, 130 gegeben. Auch die vormals benötigten zusätzlichen Polarisatoren zur Kompensation von eventuellen Fehlpolarisationen sind in der erfindungsgemäßen optischen Positionsmesseinrichtung nicht erforderlich. Ohne zusätzliche Bauteile im Abtastspalt sind evtl. auftretende Polarisationsfehler fest mit den verschiedenen Gittern im Abtaststrahlengang korreliert und damit reproduzierbar. Sie können zu Interpolationsfehlern führen, die bei Bedarf durch geeignete Kompensationsverfahren wie z.B. über eine Online-Kompensation korrigierbar sind.

Über eine simultane Optimierung der Schicht- und Gitterparameter des Aufspaltgitters 121, der Transmissionsgitter 131.1, 131.2, des Reflektors und des Vereinigungsgitters 122 lässt sich der polarisationsübersprechende Anteil so optimieren, dass eine maximale Modulation der interferierenden Teilstrahlenbündel erreicht wird. Die Wechselwirkung jedes Gitters 121, 122, 131.1, 131.2 mit den entsprechenden Strahlenbündeln wird dabei über eine Jones-Matrix $M_Z^{(n)}$ beschrieben, welche von den jeweiligen Schicht- und Gitterparametern abhängt und das Überkoppeln des elektrischen Feldes in die möglichen Polarisationszustände s und p phasenrichtig beschreibt.

Neben den konkret beschriebenen Ausführungsbeispielen existieren im Rahmen der vorliegenden Erfindung selbstverständlich noch weitere Ausgestaltungsmöglichkeiten.

So ist beispielsweise möglich, dass anstelle von zwei separat entlang der Messrichtung beweglichen Maßverkörperungen lediglich eine der beiden Maßverkörperungen beweglich angeordnet ist, die andere hingegen z.B. stationär angeordnet und einer Abtasteinheit zugeordnet ist.

Ebenso ist möglich, dass einer der beiden Maßverkörperungen oder beide zusätzlich in einer von der Messrichtung unterschiedlichen Richtung verschiebbar ist, um darüber eine Positionsmesseinrichtung gemäß der eingangs zitierten WO 2008/138501 A1 aufzubauen.

Ferner kann anstelle des in Figur 3a, 3b veranschaulichten Ausführungsbeispiels vorgesehen werden, dass die Lichtquelle und/oder die Detektorelemente nicht über Lichtleitfasern gekoppelt entfernt von der Abtasteinheit angeordnet werden, sondern in dieser integriert angeordnet sind.

Desweiteren ist es möglich, dass das Aufspalt- und Vereinigungsgitter auf der ersten Maßverkörperung als ein einziges Gitter ausgebildet sind und hier keine zwei separaten Gitterspuren vorgesehen werden müssen.

Schließlich kann vorgesehen sein, dass in der zweiten Maßverkörperung anstelle des im obigen Ausführungsbeispiels vorgesehenen diffraktiven Dachkantreflektors ein diffraktiver Retroreflektor ausgebildet wird usw..

**Patentansprüche**

1. Optische Positionsmesseinrichtung zur Erfassung der Relativposition einer ersten Maßverkörperung und einer zweiten Maßverkörperung, die relativ zueinander entlang mindestens einer Messrichtung beweglich angeordnet sind, wobei an einem Aufspaltgitter eine Aufspaltung eines von einer Lichtquelle emittierten Beleuchtungsstrahlenbündels in mindestens zwei Teilstrahlenbündel erfolgt, die Teilstrahlenbündel beim Durchlaufen von Abtaststrahlengängen unterschiedliche polarisationsoptische Wirkungen erfahren und nach einer Wiedervereinigung der unterschiedlich polarisierten Teilstrahlenbündel an einem Vereinigungsgitter aus dem resultierenden Signalstrahlenbündel mehrere phasenverschobene, verschiebungsabhängige Abtastsignale erzeugbar sind, wobei in den Abtaststrahlengängen der Teilstrahlenbündel zwischen Aufspaltung und Wiedervereinigung keine polarisationsoptischen Bauelemente angeordnet sind,
   **dadurch gekennzeichnet,**
   **dass** zur Erzeugung der unterschiedlichen polarisationsoptischen Wirkungen auf die Teilstrahlenbündel (TS1, TS2)

   - ein konisch einfallendes Beleuchtungsstrahlenbündel (B) das Aufspaltgitter (21; 121) beaufschlagt, wobei das einfallende Beleuchtungsstrahlenbündel (B) in einer Einfallsebene (E) senkrecht zur Messrichtung (x; y) unter einem von 0° verschiedenen Winkel verläuft und die Einfallsebene (E) durch die Gitternormale auf das Aufspaltgitter (21; 121) und die Einfallsrichtung des Beleuchtungsstrahlenbündels (B) aufgespannt ist und
   - die Abtaststrahlengänge der Teilstrahlenbündel (TS1, TS2) zwischen Aufspaltung und Wiedervereinigung spiegelsymmetrisch zur Einfallsebene (E) ausgebildet sind.

2. Optische Positionsmesseinrichtung nach Anspruch 1, **dadurch gekennzeichnet, dass** das von der Lichtquelle (11) emittierte Beleuchtungsstrahlenbündel (B) eine lineare Polarisation mit symmetrischer oder antisymmetrischer Spiegelsymmetrie bezüglich der Einfallsebene (E) aufweist.

3. Optische Positionsmesseinrichtung nach Anspruch 2, **dadurch gekennzeichnet, dass** in den Abtaststrahlengängen der Teilstrahlenbündel (TS1, TS2) zwischen Aufspaltung und Wiedervereinigung jeweils ein oder mehrere Gitter (21, 31.1, 31.2, 22; 121, 131.1, 131.2, 122) angeordnet sind, die derart ausgebildet sind, dass

- die Spiegelsymmetrie bezüglich der Einfallsebene (E) für die Teilstrahlenbündel (TS1, TS2) erhalten bleibt, und
- dass im Zusammenwirken der Komponenten ein Polarisationsübersprechen von senkrecht und parallel polarisierten Teilstrahlenbündeln (TS1, TS2) möglich ist.

4. Optische Positionsmesseinrichtung nach Anspruch 3, **dadurch gekennzeichnet, dass** die Teilstrahlenbündel (TS1, TS2) am Wiedervereinigungsort eine entgegengesetzte zirkulare Polarisation aufweisen.

5. Optische Positionsmesseinrichtung nach Anspruch 3, **dadurch gekennzeichnet, dass** die Teilstrahlenbündel (TS1, TS2) am Wiedervereinigungsort eine zueinander orthogonale elliptische Polarisation aufweisen.

6. Optische Positionsmesseinrichtung nach Anspruch 3, **dadurch gekennzeichnet, dass** die Teilstrahlenbündel (TS1, TS2) am Wiedervereinigungsort so polarisiert sind, dass das Vektorprodukt der zugehörigen Jones-Vektoren den Wert 2/3 nicht übersteigt.

7. Optische Positionsmesseinrichtung nach mindestens einem der vorhergehenden Ansprüche, **dadurch gekennzeichnet, dass** die erste Maßverkörperung (20; 120) ein sich in Messrichtung (x; y) erstreckendes erstes Reflexionsgitter oder Transmissionsgitter umfasst, das als Aufspaltgitter (21; 121) für das Beleuchtungsstrahlenbündel (B) fungiert.

8. Optische Positionsmesseinrichtung nach Anspruch 7, **dadurch gekennzeichnet, dass** die erste Maßverkörperung (20; 120) ein sich in Messrichtung (x) ersteckendes zweites Reflexionsgitter oder Transmissionsgitter umfasst, das als Vereinigungsgitter (22; 122) für die Teilstrahlenbündel (TS1, TS2) fungiert.

9. Optische Positionsmesseinrichtung nach Anspruch 7 oder 8, **dadurch gekennzeichnet, dass** die zweite Maßverkörperung (30; 130) eine transparente Platte (133) umfasst, in der für jedes Teilstrahlenbündel (TS1, TS2) ein diffraktiver Retroreflektor oder ein diffraktives Dachkantprisma mit einer Linse und einem Reflektor (132) ausgebildet ist.

10. Optische Positionsmesseinrichtung nach Anspruch 9, **dadurch gekennzeichnet, dass**

- auf der der ersten Maßverkörperung (20; 120) zugewandten ersten Seite der transparenten Platte (133) die Linsen in Form mindestens eines Transmissionsgitters (31.1, 31.2; 131.1, 131.2) ausgebildet sind und
- auf der der ersten Maßverkörperung (20; 120) abgewandten zweiten Seite der transparenten Platte (133) der Reflektor (132) in Form mindestens einer Reflexionsschicht ausgebildet ist, deren reflektierende Seite in Richtung der ersten Seite der Platte (133) orientiert ist.

11. Optische Positionsmesseinrichtung nach Anspruch 9, **dadurch gekennzeichnet, dass** die Komponenten der ersten Maßverkörperung (20; 120) und der zweiten Maßverkörperung (30; 130) derart ausgebildet und angeordnet sind, dass

- das von der Lichtquelle (11) einfallende Beleuchtungsstrahlenbündel (B) am ersten Reflexionsgitter der ersten Maßverkörperung (20; 120) eine Aufspaltung in zwei Teilstrahlenbündel (TS1, TS2) erfährt und die Teilstrahlenbündel (TS1, TS2) dann in Richtung der zweiten Maßverkörperung (30; 130) propagieren,
- die Teilstrahlenbündel (TS1, TS2) in der transparenten Platte der zweiten Maßverkörperung (30; 130) jeweils einen diffraktiven Retroreflektor oder einen Dachkantreflektor durchlaufen und dann senkrecht zur Messrichtung (x; y) versetzt wieder in Richtung der ersten Maßverkörperung (20; 120) propagieren,
- die Teilstrahlenbündel (TS1, TS2) am zweiten Reflexionsgitter der ersten Maßverkörperung (20; 120) an einem Vereinigungsort zur Überlagerung kommen und ein Signalstrahlenbündel (S) mit dem Paar überlagerter Teilstrahlenbündel (TS1, TS2) wieder zurück in Richtung der zweiten Maßverkörperung (30; 130) propagiert.

12. Optische Positionsmesseinrichtung nach Anspruch 11, **dadurch gekennzeichnet, dass** in einer gegenüber den beiden Maßverkörperungen (120, 130) stationären Abtasteinheit (150) ein Umlenkspiegel (155), ein Gitter (151), eine Linse (152) sowie mehrere Polarisatoren (153.1, 153.2, 153.3) angeordnet sind und die Abtasteinheit (150) über ein oder mehrere Lichtleitfasern (154.1, 154.2, 154.3; 156) mit einer Lichtquelle und mehreren Detektorelementen gekoppelt ist.

**13.** Optische Positionsmesseinrichtung nach Anspruch 11, **dadurch gekennzeichnet, dass** in einer gegenüber den beiden Maßverkörperungen stationären Abtasteinheit eine Lichtquelle, ein Umlenkspiegel, ein Gitter eine Linse, mehrere Polarisatoren sowie mehrere Detektorelementen angeordnet sind.

**14.** Optische Positionsmesseinrichtung nach mindestens einem der vorhergehenden Ansprüche, **dadurch gekennzeichnet, dass** jede der beiden Maßverkörperungen (20, 30; 120, 130) entlang mindestens einer Messrichtung (x; y) beweglich angeordnet ist.

**Claims**

**1.** Optical position measurement device for capturing the relative position of a first measuring scale and of a second measuring scale, which are arranged such that they can move relative to one another along at least one measurement direction, wherein an illumination beam emitted by a light source is split into at least two partial beams at a splitting grating, the partial beams undergo different polarization-optical effects when travelling along scanning beam paths, and, once the differently polarized partial beams are recombined at a recombination grating, a plurality of phase-shifted shift-dependent scanning signals are generatable from the resulting signal beam, wherein no polarization-optical components are arranged in the scanning beam paths of the partial beams between splitting and recombination,

**characterized**
**in that**, for generating the different polarization-optical effects on the partial beams (TS1, TS2),

- a conically incident illumination beam (B) strikes the splitting grating (21; 121), wherein the incident illumination beam (B) in a plane of incidence (E) extends perpendicular to the measurement direction (x; y) at an angle that differs from 0°, and the plane of incidence (E) is defined by the grating normal on the splitting grating (21; 121) and the incidence direction of the illumination beam (B), and
- the scanning beam paths of the partial beams (TS1, TS2) between splitting and recombination are mirror-symmetric to the plane of incidence (E).

**2.** Optical position measurement device according to Claim 1, **characterized in that** the illumination beam (B) emitted by the light source (11) has a linear polarization with symmetric or anti-symmetric mirror symmetry with respect to the plane of incidence (E).

**3.** Optical position measurement device according to Claim 2, **characterized in that** in each case one or more gratings (21, 31.1, 31.2, 22; 121, 131.1, 131.2, 122) are arranged in the scanning beam paths of the partial beams (TS1, TS2) between splitting and recombination, which gratings are configured such that

- the mirror symmetry with respect to the plane of incidence (E) is maintained for the partial beams (TS1, TS2), and
- that due to the interaction of the components, polarization crosstalk of perpendicularly and parallel-polarized partial beams (TS1, TS2) is possible.

**4.** Optical position measurement device according to Claim 3, **characterized in that** the partial beams (TS1, TS2) have an opposite circular polarization at the point of recombination.

**5.** Optical position measurement device according to Claim 3, **characterized in that** the partial beams (TS1, TS2) have a mutually orthogonal elliptical polarization at the point of recombination.

**6.** Optical position measurement device according to Claim 3, **characterized in that** the partial beams (TS1, TS2) are polarized at the point of recombination such that the vector product of the associated Jones vectors does not exceed the value 2/3.

**7.** Optical position measurement device according to at least one of the preceding claims, **characterized in that** the first measuring scale (20; 120) comprises a first reflection grating or transmission grating which extends in the measurement direction (x; y) and functions as the splitting grating (21; 121) for the illumination beam (B).

**8.** Optical position measurement device according to Claim 7, **characterized in that** the first measuring scale (20; 120) comprises a second reflection grating or transmission grating which extends in the measurement direction (x) and functions as the recombination grating (22; 122) for the partial beams (TS1, TS2).

9. Optical position measurement device according to Claim 7 or 8, **characterized in that** the second measuring scale (30; 130) comprises a transparent plate (133), in which for each partial beam (TS1, TS2) a diffractive retroreflector or a diffractive roof prism with a lens and a reflector (132) is formed.

10. Optical position measurement device according to Claim 9, **characterized in that**

- on the first side of the transparent plate (133), which faces the first measuring scale (20; 120), the lenses are configured in the form of at least one transmission grating (31.1, 31.2; 131.1, 131.2), and
- on the second side of the transparent plate (133), which is remote from the first measuring scale (20; 120), the reflector (132) is configured in the form of at least one reflection layer, the reflective side of which is oriented in the direction of the first side of the plate (133).

11. Optical position measurement device according to Claim 9, **characterized in that** the components of the first measuring scale (20; 120) and of the second measuring scale (30; 130) are configured and arranged such that

- the illumination beam (B) which is incident from the light source (11) undergoes splitting into two partial beams (TS1, TS2) at the first reflection grating of the first measuring scale (20; 120), and the partial beams (TS1, TS2) then propagate in the direction of the second measuring scale (30; 130),
- the partial beams (TS1, TS2) in the transparent plate of the second measuring scale (30; 130) travel in each case through a diffractive retroreflector or a roof reflector and then propagate, offset perpendicular to the measurement direction (x; y), in the direction of the first measuring scale (20; 120),
- the partial beams (TS1, TS2) are superposed at a recombination site at the second reflection grating of the first measuring scale (20; 120), and a signal beam (S) having the pair of superposed partial beams (TS1, TS2) propagates back in the direction of the second measuring scale (30; 130).

12. Optical position measurement device according to Claim 11, **characterized in that** a deflection mirror (155), a grating (151), a lens (152) and a plurality of polarizers (153.1, 153.2, 153.3) are arranged in a scanning unit (150), which is stationary with respect to the two measuring scales (120, 130), and the scanning unit (150) is coupled to a light source and a plurality of detector elements via one or more optical waveguides (154.1, 154.2, 154.3; 156).

13. Optical position measurement device according to Claim 11, **characterized in that** a light source, a deflection mirror, a grating, a lens, a plurality of polarizers and a plurality of detector elements are arranged in a scanning unit which is stationary with respect to the two measuring scales.

14. Optical position measurement device according to at least one of the preceding claims, **characterized in that** each of the two measuring scales (20, 30; 120, 130) is arranged such that it moves along at least one measurement direction (x; y).

**Revendications**

1. Dispositif optique de mesure de position destiné à saisir la position relative d'un premier ensemble de mesure et d'un deuxième ensemble de mesure disposés de manière à pouvoir se déplacer l'un par rapport à l'autre suivant au moins une direction de mesure,

une division en au moins deux faisceaux partiels de rayons d'un faisceau de rayons d'éclairage émis par une source de lumière ayant lieu,

les faisceaux partiels de rayons subissant différents effets optiques de polarisation lors de leur passage sur des parcours de rayons de palpage et après réunification sur une grille de réunification des différents faisceaux partiels de rayons polarisés différemment,

plusieurs signaux de palpage déphasés pouvant être formés en fonction du décalage à partir du faisceau résultant de rayons de signalisation, aucun composant de polarisation optique n'étant disposé entre la division et la réunification dans les parcours de rayons de palpage des faisceaux partiels de rayons,

**caractérisé en ce que**

pour former les différents effets optiques de polarisation sur les faisceaux partiels (TS1, TS2) de rayons,

- un faisceau conique incident (B) de rayons d'éclairage est appliqué sur la grille de division (21; 121), le faisceau incident (B) de rayons d'éclairage s'étendant dans un plan d'incidence (E) perpendiculairement à la direction de mesure (x; y) sous un angle différent de 0° le plan d'incidence (E) étant sous-tendu par la normale à la grille

EP 2 955 489 B1

sur la grille de division (21; 121) et la direction d'incidence du faisceau (B) de rayons d'éclairage et
- les parcours des rayons de palpage des faisceaux partiels (TS1, TS2) de rayons présente entre la division et la réunification une symétrie spéculaire par rapport au plan d'incidence (E).

2. Dispositif optique de mesure de position selon la revendication 1, **caractérisé en ce que** le faisceau (B) de rayons d'éclairage émis par la source de lumière (11) présente une polarisation linéaire avec une symétrie spéculaire symétrique ou antisymétrique par rapport au plan d'incidence (E).

3. Dispositif optique de mesure de position selon la revendication 2, **caractérisé en ce que** dans les parcours de rayons de palpage des faisceaux partiels (TS1, TS2) de rayons une ou plusieurs grilles (21, 31.1, 31.2, 22; 121, 131.1, 131.2, 122) sont disposées entre la division et la réunification et configurées de telle sorte que

- la symétrie spéculaire par rapport au plan d'incidence (E) est conservée pour les faisceaux partiels (TS1, TS2) de rayons et
- **en ce que** grâce à la coopération des composants, une transmodulation de polarisation de faisceaux partiels (TS1, TS2) de rayons polarisés perpendiculairement et parallèlement est possible.

4. Dispositif optique de mesure de position selon la revendication 3, **caractérisé en ce que** les faisceaux partiels (TS1, TS2) de rayons présentent des polarisations circulaires opposées au site de leur réunification.

5. Dispositif optique de mesure de position selon la revendication 3, **caractérisé en ce que** les faisceaux partiels (TS1, TS2) de rayons présentent des polarisations elliptiques mutuellement perpendiculaires au site de leur réunification.

6. Dispositif optique de mesure de position selon la revendication 3, **caractérisé en ce que** les faisceaux partiels (TS1, TS2) de rayons sont polarisés sur le site de leur réunification de telle sorte que le produit vectoriel des vecteurs de Jones associés ne dépasse par la valeur de 2/3.

7. Dispositif optique de mesure de position selon au moins l'une des revendications précédentes, **caractérisé en ce que** le premier ensemble de mesure (20; 120) comporte une première grille de réflexion ou première grille de transmission qui s'étend dans la direction de mesure (x; y) et qui joue le rôle d'une grille de division (21; 121) pour le faisceau (B) de rayons d'éclairage.

8. Dispositif optique de mesure de position selon la revendication 7, **caractérisé en ce que** le premier ensemble de mesure (20; 120) comporte une deuxième grille de réflexion ou grille de transmission qui s'étend dans la direction de mesure (x) et qui joue le rôle d'une grille de réunification (22; 122) pour les faisceaux partiels (TS1, TS2) de rayons.

9. Dispositif optique de mesure de position selon les revendications 7 ou 8, **caractérisé en ce que** le deuxième ensemble de mesure (30; 130) comporte une plaque transparente (133) dans laquelle un rétro-réflecteur ou un prisme diffracteur triangulaire présentant une lentille et un réflecteur (132) sont formés pour chaque faisceau partiel (TS1, TS2) de rayons.

10. Dispositif optique de mesure de position selon la revendication 9, **caractérisé en ce que**

- sur le premier côté de la plaque transparente (133), tourné vers le premier ensemble de mesure (20; 120), les lentilles sont configurées sous la forme d'au moins une grille de transmission (31.1, 31.2; 131.1, 131.2) et
- sur le deuxième côté de la plaque transparente (133), non tourné vers l'ensemble de mesure (20; 120), le réflecteur (132) est configuré sous la forme d'au moins une couche réfléchissante dont le côté réfléchissant est orienté en direction du premier côté de la plaque (133).

11. Dispositif optique de mesure de position selon la revendication 9, **caractérisé en ce que** les composants du premier ensemble de mesure (20; 120) et du deuxième ensemble de mesure (30; 130) sont configurés et disposés de telle sorte que

- le faisceau (B) de rayons d'éclairage provenant de la source (11) de lumière et incident sur la première grille de réflexion du premier ensemble de mesure (20; 120) subit une division en deux faisceaux partiels (TS1, TS2) de rayons, les faisceaux partiels (TS1, TS2) de rayons se propageant ensuite en direction du deuxième ensemble de mesure (30; 130),

- les faisceaux partiels (TS1, TS2) de rayons traversent un rétro-réflecteur diffracteur ou un réflecteur triangulaire dans la plaque transparente du deuxième ensemble de mesure (30; 130) et se propagent ensuite perpendiculairement à la direction de mesure (x; y) en direction du premier ensemble de mesure (20; 120),
- les faisceaux partiels (TS1, TS2) de rayons viennent se superposer en un emplacement de réunification situé sur la deuxième grille de réflexion du premier ensemble de mesure (20; 120), un faisceau (S) de rayons de signalisation présentant la paire de faisceaux partiels (TS1, TS2) de rayons superposés se propageant de nouveau en direction du deuxième ensemble de mesure (30; 130).

12. Dispositif optique de mesure de position selon la revendication 11, **caractérisé en ce qu'**un miroir de déviation (155), une grille (151), une lentille (152) ainsi que plusieurs polariseurs (153.1, 153.2, 153.3) sont disposés dans une unité de palpage (150) stationnaire par rapport aux deux ensembles de mesure (120, 130) et **en ce que** l'unité de palpage (150) est accordée par l'intermédiaire d'une ou plusieurs fibres (154.1, 154.2, 154.3; 156) conductrices de lumière avec une source de lumière et plusieurs éléments de détecteur.

13. Dispositif optique de mesure de position selon la revendication 11, **caractérisé en ce qu'**un une source de lumière, un miroir de déviation, une grille, une lentille, plusieurs polariseurs ainsi que plusieurs éléments de détecteur sont disposés dans une unité de palpage stationnaire par rapport aux deux ensembles de mesure.

14. Dispositif optique de mesure de position selon au moins l'une des revendications précédentes, **caractérisé en ce que** chacun des deux ensembles de mesure (20, 30; 120, 130) est disposé de manière à pouvoir se déplacer suivant au moins une direction de mesure (x; y).

## FIG.1

STAND DER TECHNIK

# FIG.2a

FIG.2b

FIG.3a

FIG.3b

FIG. 4a

122

121

x

y

FIG. 4b

x

y

131.2

131

FIG. 4c

x

y

132

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0481356 A2
- WO 2008138501 A1
- EP 2466272 A2